(19) Europäisches Patentamt
European Patent Office
Office européen des brevets

(11) **EP 2 619 932 B1**

(12) **EUROPÄISCHE PATENTSCHRIFT**

(45) Veröffentlichungstag und Bekanntmachung des Hinweises auf die Patenterteilung:
**25.03.2015   Patentblatt 2015/13**

(51) Int Cl.:
*H04B 17/00* (2015.01)          *G01R 23/20* (2006.01)
*G01R 31/11* (2006.01)

(21) Anmeldenummer: **11754312.4**

(22) Anmeldetag: **29.07.2011**

(86) Internationale Anmeldenummer:
**PCT/EP2011/063064**

(87) Internationale Veröffentlichungsnummer:
**WO 2012/038126 (29.03.2012 Gazette 2012/13)**

(54) **VERFAHREN UND SYSTEM ZUR ERMITTLUNG DES ENTSTEHUNGSORTES VON PASSIVEN INTERMODULATIONSPRODUKTEN**

METHOD AND SYSTEM FOR DETERMINING THE LOCATION OF ORIGIN OF PASSIVE INTERMODULATION PRODUCTS

PROCÉDÉ ET SYSTÈME DE DÉTERMINATION DU LIEU D'APPARITION DE PRODUITS D'INTERMODULATION PASSIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2010   DE 102010046099**

(43) Veröffentlichungstag der Anmeldung:
**31.07.2013   Patentblatt 2013/31**

(73) Patentinhaber: **Rohde & Schwarz GmbH & Co. KG**
**81671 München (DE)**

(72) Erfinder:
• **NEIDHARDT, Steffen**
**84405 Dorfen (DE)**
• **EVERS, Christian**
**85551 Kirchheim (DE)**

(74) Vertreter: **Körfer, Thomas**
**Mitscherlich PartmbB**
**Patent- und Rechtsanwälte**
**Sonnenstrasse 33**
**80331 München (DE)**

(56) Entgegenhaltungen:
**US-A1- 2010 164 504**

• **JUSTIN HENRIE ET AL: "Prediction of Passive Intermodulation From Coaxial Connectors in Microwave Networks", IEEE TRANSACTIONS ON MICROWAVE THEORY AND TECHNIQUES, IEEE SERVICE CENTER, PISCATAWAY, NJ, US, Bd. 56, Nr. 1, 1. Januar 2008 (2008-01-01) , Seiten 209-216, XP011198642, ISSN: 0018-9480, DOI: 10.1109/TMTT.2007.912166**
• **BAMIDELE ADEBISI ET AL: "Wire integrity testing using intermodulation product processing", POWER LINE COMMUNICATIONS AND ITS APPLICATIONS, 2008. ISPLC 2008. IEEE INTERNATIONAL SYMPOSIUM ON, IEEE, PISCATAWAY, NJ, USA, 2. April 2008 (2008-04-02), Seiten 213-217, XP031247897, ISBN: 978-1-4244-1975-3**
• **DMITRY E ZELENCHUK ET AL: "Passive Intermodulation in Finite Lengths of Printed Microstrip Lines", IEEE TRANSACTIONS ON MICROWAVE THEORY AND TECHNIQUES, IEEE SERVICE CENTER, PISCATAWAY, NJ, US, Bd. 56, Nr. 11, 1. November 2008 (2008-11-01), Seiten 2426-2434, XP011236940, ISSN: 0018-9480, DOI: 10.1109/TMTT.2008.2005886**

**Beschreibung**

Die Erfindung betrifft ein Verfahren und ein System zur Ermittlung des Entstehungsortes von passiven Intermodulationsprodukten in Messobjekten.

Werden passive Baugruppen, beispielsweise Steckverbinder, Kabel und Antennen, von zwei Hochfrequenzsignalen beaufschlagt, so entstehen an Orten mit nichtlinearer Übertragungscharakteristik aufgrund des Effektes der nichtlinearen Verzerrung passive Intermodulationsprodukte. Derartige Ort mit nichtlinearer Übertragurigscharakteristik sind beispielsweise verunreinigte oder oxidierte Stellen im leitenden Material, magnetische Materialien im Leitungspfad, Übergänge zwischen verschiedenen Metallen, geometrische Inhomogenitäten im Leitungspfad z.B. Metallspäne an Metallkanten.

Fallen diese passiven Intermodulationsprodukte in den Frequenzbereich des Übertragungssystems, so führen sie im Empfänger zu unerwünschten Störungen, die eine korrekte Dekodierung bzw. Detektion der übertragenen Nutzdaten erschweren bzw. unmöglich machen.

Aus der US 2010/0164504 A1 ist ein Messverfahren bekannt, bei welchem eines der beiden Anregungssignale gesweept wird. Dies hat sich jedoch in der Praxis nicht bewährt.

Aufgabe der Erfindung ist es deshalb, ein Verfahren und ein System zur Ermittlung des exakten Entstehungsortes von passiven Intermodulationsprodukten in verteilten Messobjekten im Hinblick auf eine darauf aufbauende Beseitigung der störenden Nichtlinearität im verteilten Messobjekt.

Die Aufgabe wird durch ein erfindungsgemäßes Verfahren zur Ermittlung des Entstehungsortes eines passiven Intermodulationsproduktes mit den Merkmalen des Patentanspruchs 1 und durch ein erfindungsgemäßes System zur Ermittlung des Entstehungsortes eines passiven Intermodulationsproduktes mit den Merkmalen des Patentanspruchs 10 gelöst. Vorteilhafte technische Erweiterungen sind in den abhängigen Patentansprüchen aufgeführt.

Erfindungsgemäß wird das verteilte Messobjekt mit zwei rein sinusförmigen Anregungssignalen (Continuous-Wave-Signalen, CW-Signalen) beaufschlagt, deren Frequenzen einen bestimmten Frequenzabstand aufweisen. Durch die Anregung des verteilten Messobjekts entsteht an der Nichtidealität des verteilten Messobjekts ein passives Intermodulationsprodukt, das am Entstehungsort reflektiert und/oder transmittiert wird. Durch Messung der Phase des passiven Intermodulationsprodukts mit einem Messgerät am Eingangsanschluss des verteilten Messobjekts im Fall der Reflexion des passiven Intermodulationsproduktes oder am Ausgangsanschluss des verteilten Messobjekts im Fall der Transmission des passiven Intermodulationsproduktes wird bei bekannter Frequenz und bekannter Phase des passiven Intermodulationsproduktes am Entstehungsort die Laufzeit des passiven Intermodulationsproduktes vom.Entstehungsort zum Messgerät ermittelt. Aus der bekannten Topologie des verteilten Messobjekts wird mithilfe der ermittelten Laufzeit des passiven Intermodulationsproduktes auf den Entstehungsort des passiven Intermodulationsproduktes geschlossen.

Als passives Intermodulationsprodukt wird typischerweise das passive Intermodulationsprodukt dritter Ordnung gemessen, das sich aus der Subtraktion der doppelten Frequenz des einen Anregungssignals und der einfachen Frequenz des anderen Anregungssignals ergibt ($f_{IM3}$ = 2·$f_2$-$f_1$, wobei $f_1$ und $f_2$ die Frequenzen der beiden Anregungssignale sind). Jedes andere beliebige Intermodulationsprodukt kann aber genauso verwendet werden und ist von der Erfindung mit abgedeckt.

In einem ersten Beispiel ist die Phase des passiven Intermodulationsprodukts am Entstehungsort des passiven Intermodulationsprodukts ermittelbar. Die Phase des passiven Intermodulationsprodukts am Entstehungsort des passiven Intermodulationsprodukts ergibt sich aus den Phasen der beiden Anregungssignale am Eritstehungsort des passiven Intermodulationsprodukts, die mittig zu den messbaren Phasen der erzeugten Anregungssignale bei der Erzeugung und den messbaren Phasen der an der Nichtidealität des verteilten Meßobjekts reflektierten Anregungssignale beim Eintreffen im Messgerät liegen.

In der Erfindung wird die Phase des passiven Intermodulationsprodukts am Entstehungsort des passiven Intermodulationsprodukts nicht ermittelt. Staatdessen wird das verteilte Messobjekt mit zwei rein sinusförmigen Anregungssignalen ein zweites Mal beaufschlagt, deren Frequenzen unterschiedlich zu den Frequenzen bei der ersten Anregung sind und deren Frequenzabstand aber identisch zum Frequenzabstand bei der ersten Anregung ist. Sind die Phasen der beiden Anregungssignale bei der Erzeugung und damit auch am Entstehungsort des passiven Intermodulationsprodukts zwischen den beiden Anregungen phasenkohärent, so sind auch die Phasen des passiven Intermodulationsprodukts am Entstehungsort des passiven Intermodulationsprodukts bei beiden Anregungen zueinander phasenkohärent.

Durch Differenzbildung der gemessenen Phasen der beiden passiven Intermodulationsprodukte, die sich bei den beiden Anregungen des verteilten Messobjekts ergeben, heben sich die Phasen des erzeugten passiven Intermodulationsprodukts am Entstehungsort des passiven Intermodulationsprodukts auf und werden für die Berechnung der Laufzeit des passiven Intermodulationsprodukt zwischen dem Entstehungsort des passiven Intermodulationsprodukt und dem Ort des Messgeräts und damit für die Bestimmung des Entstehungsorts nicht benötigt. Für die Ermittlung der Laufzeit des passiven Intermodulationsprodukts vom Entstehungsort zum Ort des Messgeräts werden die beiden Phasen und die beiden Frequenzen des passiven Intermodulationsprodukts am Entstehungsort des passiven Intermodulationsprodukts bei den beiden Anregungen benötigt.

Zusätzliche Phasenänderungen des erzeugten passiven Intermodulationsprodukts aufgrund der Reflexion und der Transmission an der Nichtidealität des verteilten Messobjekts werden vernachlässigt, wenn die Frequenzänderungen zwischen den beiden Anregungen minimal sind.

Phasenänderungen der passiven Intermodulationsprodukte zwischen dem Eingangsanschluss des verteilten Messobjekts - im Fall der Reflexion des passiven Intermodulationsprodukts am Entstehungsort - bzw. dem Ausgangsanschluss des verteilten Messobjekts - im Fall der Transmission des passiven Intermodulationsprodukts am Entstehungsort - und dem Messgerät werden in einer Vormessung ermittelt und werden bei der Berechnung der Laufzeit des passiven Intermodulationsprodukts zwischen dem Entstehungsort des passiven Intermodulationsprodukts und dem Eingangs- bzw. Ausgangsanschluss des verteilten Messobjekts berücksichtigt.

Im Folgenden werden die Beispiele des Verfahrens und des Systems zur Ermittlung des Entstehungsortes von passiven Intermodulationsprodukten in Messobjekten anhand der Zeichnung im Detail erläutert. Die Figuren der Zeichnung zeigen:

Fig. 1    ein Blockdiagramm eines Systems zur Ermittlung des Entstehungsortes von passiven Intermodulationsprodukten in Messobjekten,

Fig. 2    ein Flussdiagramm eines ersten Beispiels des Verfahrens zur Ermittlung des Entstehungsortes von passiven Intermodulationsprodukten in Messobjekten und

Fig. 3    ein Flussdiagramm einer Ausführungsform des erfindungsgemäßen Verfahrens zur Ermittlung des Entstehungsortes von passiven Intermodulationsprodukten in Messobjekten.

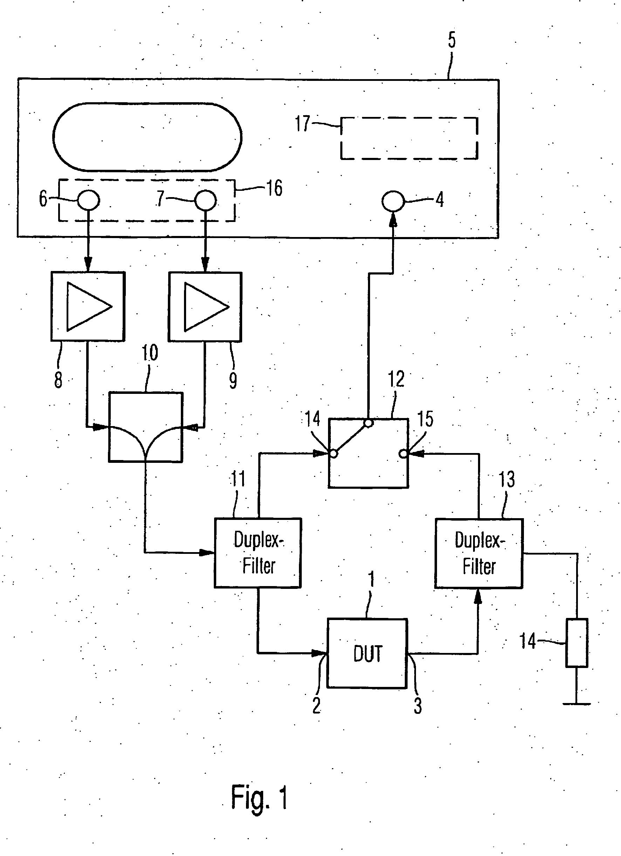

Bevor das Verfahren und das System zur Ermittlung des Entstehungsortes von passiven Intermodulationsprodukten in Messobjekten anhand der Figuren 1 bis 3 im Detail erläutert werden, werden im Folgenden die für das Verständnis der Erfindung erforderlichen mathematischen Grundlagen hergeleitet:

Wird eine Nichtidealität in einem verteilten Messobjekt gleichzeitig von zwei Anregungssignalen $x_1(t)$ und $x_2(t)$ gemäß Gleichung (1A) und (1B) angeregt, die jeweils, eine rein sinusförmige Signalcharakteristik aufweisen, also CW-Signale (Continuous Wave) darstellen und somit jeweils eine einzige Spektrallinie aufweisen, deren Frequenzen $f_1$ und $f_2$ gemäß Gleichung (1C) einen bestimmten Frequenzabstand $\Delta f$ besitzen, so wird aufgrund des nichtlinearen Übertragungsverhaltens dieser Nichtidealität gemäß Gleichung (2) u.a. auch ein passives Intermodulationsprodukt dritter Ordnung $x_{IM3}(t)$ gemäß Gleichung (3) produziert.

$$x_1(t) = e^{j(2\pi f_1 \cdot t + \varphi_1)} \tag{1A}$$

$$x_2(t) = e^{j(2\pi f_2 \cdot t + \varphi_1)} \tag{1B}$$

$$g[x(t)] = k_0 + k_1 \cdot [x(t)] + k_2 \cdot [x(t)]^2 + k_3 \cdot [x(t)]^3 + \ldots \text{ mit } x(t) = x_1(t) + x_2(t) \tag{1C}$$

$$f_1 = f_2 + \Delta f \tag{2}$$

$$x_{IM3}(t) = e^{j[(2\cdot 2\pi f_1 - 2\pi f_1)\cdot t + 2\cdot \varphi_1 - \varphi_2]} \tag{3}$$

Die Phase $\varphi_{IM3Entst}$ dieses passiven Intermodulationsprodukts dritter Ordnung am Entstehungsort ergibt sich folglich gemäß Gleichung (4).

$$\varphi_{IM3Entst} = 2 \cdot \varphi_2 - \varphi_1 \tag{4}$$

Die in einem Messgerät gemessene Phase $\varphi_{IM3Mess}$ eines passiven Intermodulationsprodukts dritter Ordnung, das mit den Eingangs- oder Ausgangsanschluss des verteilten Messobjekts verbunden ist, ergibt sich gemäß Gleichung (5), wenn man voraussetzt, dass die Laufzeit zwischen dem Entstehungsort des passiven Intermodulationsprodukts und dem Messgerät $\Delta t$ ist.

$$\varphi_{IM3Mess} = (2 \cdot 2\pi \cdot f_1 - 2\pi \cdot f_2) \cdot \Delta t + 2 \cdot \varphi_1 - \varphi_2 \qquad (5)$$

Die Laufzeit $\Delta t$ des passiven Intermodulationsprodukts zwischen dem Entstehungsort des passiven Intermodulationsprodukt und dem Messgerät ergibt sich folglich gemäß Gleichung (6) aus der im Messgerät gemessenen Phase $\varphi_{IM3Mess}$ des passiven Intermodulationsprodukts, der Phase $\varphi_{IM3Entst}$ des passiven Intermodulationsprodukts am Entstehungsort des passiven Intermodulationsprodukts und der Frequenz $2 \cdot f_1 - f_2$ des passiven Intermodulationsprodukts.

$$\Delta t = \frac{\varphi_{IM3Mess} - \varphi_{IM3Entst}}{2 \cdot 2\pi \cdot f_1 - 2\pi \cdot f_2} \qquad (6)$$

Die in einer Vormessung ermittelte Phasenänderung $\Delta\varphi_{IM3DUT\_Mess}$ des passiven Intermodulationsproduktes zwischen dem Eingangs- bzw. Ausgangsanschluss des verteilten Messobjekts und dem Messgerät wird gemäß Gleichung (7) zur Berechnung der Laufzeit $\Delta t$ des passiven Intermodulationsprodukts zwischen dem Entstehungsort des passiven Intermodulationsprodukts und dem Eingangs- bzw. Ausgangsanschluss des verteilten Messobjekts berücksichtigt.

$$\Delta t = \frac{\varphi_{IM3Mess} - \Delta\varphi_{IM3DUT\_Mess} - \varphi_{IM3Entst}}{2 \cdot 2\pi f_1 - 2\pi f_2} \qquad (7)$$

Die Phase $\varphi_{IM3Entst}$ des passiven Intermodulationsprodukts am Entstehungsort des passiven Intermodulationsprodukts wird bestimmt, indem die Phasen $\varphi_1$ und $\varphi_2$ der beiden Anregungssignale $x_1(t)$ und $x_2(t)$ am Entstehungsort des passiven Intermodulationsprodukts gemäß Gleichung (8A) bzw. (8B) als mittige Phasen zwischen den Phasen $\varphi_{1Erzeug}$ bzw. $\varphi_{2Erzeug}$ der beiden Anregungssignale $x_1(t)$ und $x_2(t)$ bei der Erzeugung der beiden Anregungssignale $x_1(t)$ und $x_2(t)$ und den Phasen $\varphi_{1Mess}$ bzw. $\varphi_{2Mess}$ der beiden am Entstehungsort des passiven Intermodulationsprodukts reflektierten Anregungssignale $x_1(t)$ und $x_2(t)$ bei einer Messung in einem am Ort der Erzeugung positionierten Messgerät gemessen werden.

$$\varphi_1 = \varphi_{1Erzeug} + \frac{\varphi_{1Mess} - \varphi_{1Erzeug}}{2} \qquad (8A)$$

$$\varphi_2 = \varphi_{2Erzeug} + \frac{\varphi_{2Mess} - \varphi_{2Erzeug}}{2} \qquad (8B)$$

Will man die Bestimmung der Phase $\varphi_{IM3Entst}$ des passiven Intermodulationsprodukts am Entstehungsort des passiven Intermodulationsprodukts umgehen, so wird das verteilte Messobjekt ein zweites Mal mit zwei rein sinusförmigen Anregungssignalen $x_1'(t)$ und $x_2'(t)$ gemäß Gleichung (9A) und (9B) beaufschlagt, deren Frequenzen $f_1'$ und $f_2'$ unterschiedlich zu den Frequenzen $f_1$ und $f_2$ der beiden Anregungssignale $x_1(t)$ und $x_2(t)$ bei der ersten Anregung des verteilten Messobjekts sind und deren Frequenzabstand $\Delta f$ gemäß Gleichung (10) identisch zum Frequenzabstand $\Delta f$ der Frequenzen $f_1$ und $f_2$ der beiden Anregungssignale $x_1(t)$ und $x_2(t)$ bei der ersten Anregung des verteilten Messobjekt sind.

$$x_1'(t) = e^{j(2\pi f_1' \cdot t + \varphi_1')} \qquad (9A)$$

$$x_2'(t) = e^{j(2\pi f_2' \cdot t + \varphi_2')} \qquad (8B)$$

$$\Delta f = f_1' - f_2' = f_1 - f_2 \qquad (10)$$

Das bei der zweiten Anregung des verteilten Messobjekts erzeugte passive Intermodulationsprodukt dritter Ordnung $x_{IM3}'(t)$ ergibt sich somit gemäß Gleichung (11).

$$x_{IM3}'(t) = e^{j[(2 \cdot 2\pi f_1' - 2\pi f_2')t + 2 \cdot \varphi_1' - \varphi_2']} \qquad (11)$$

Die Phase $\varphi_{IM3Entst}'$ dieses passiven Intermodulationsprodukts dritter Ordnung am Entstehungsort bei der zweiten Anregung des verteilten Messobjekts ergibt sich folglich gemäß Gleichung (12).

$$\varphi_{IM3Entst}' = 2 \cdot \varphi_2' - \varphi_1' \qquad (12)$$

Da Phasenkohärenz zwischen den Phasen $\varphi_1$ und $\varphi_2$ der beiden Anregungssignale vorausgesetzt ist, ist die Phase des passiven Intermodulationsprodukts am Entstehungsort des passiven Intermodulationsprodukts auch bei Änderung der Frequenzen der beiden Anregungssignale gemäß Gleichung (13) konstant.

$$\varphi_{IM3Entst} = 2 \cdot \varphi_2 - \varphi_1 = \varphi_{IM3Entst}' = 2 \cdot \varphi_2' - \varphi_1' \qquad (13)$$

Die Phase $\varphi_{IM3Mess}'$ des passiven Intermodulationsprodukts dritter Ordnung bei der zweiten Anregung des verteilten Messobjekts in einem Messgerät, das sich am selben Ort wie bei der ersten Anregung des verteilten Messobjekts befindet, ergibt sich gemäß Gleichung (14). Hierbei gilt, dass die Laufzeit $\Delta t$ des passiven Intermodulationsprodukts zwischen dem Entstehungsort des passiven Intermodulationsprodukts und dem Messgerät bei der zweiten Anregung des Meßobjekts aufgrund der identischen Distanz zwischen Entstehungsort und Messgerät der Laufzeit $\Delta t$ des passiven Intermodulationsprodukts zwischen dem Entstehungsort des passiven Intermodulationsprodukts und dem Messgerät bei der ersten Anregung des Messobjekts entspricht.

$$\varphi_{IM3Mess}' = (2 \cdot 2\pi \cdot f_1' - 2\pi \cdot f_2') \cdot \Delta t + 2 \cdot \varphi_1' - \varphi_2' \qquad (14)$$

Bildet man die Differenz zwischen der im Messgerät gemessenen Phase $\varphi_{IM3Mess}$ des passiven Intermodulationsprodukts dritter Ordnung bei der ersten Anregung des verteilten Messobjekts gemäß Gleichung (5) und der im Messgerät gemessenen Phase- $\varphi_{IM3Mess}'$ des passiven Intermodulationsprodukts dritter Ordnung bei der zweiten Anregung des verteilten Messobjekts gemäß Gleichung (14) und berücksichtigt man die Phasenkohärenz-Bedingung gemäß Gleichung (13), so ergibt sich nach mathematischer Umformung die Laufzeit $\Delta t$ des passiven Intermodulationsprodukts zwischen dem Entstehungsort des passiven Intermodulationsprodukts und dem Messgerät gemäß Gleichung (15), die keine Terme für die Phase des passiven Intermodulationsprodukts am Entstehungsort des passiven Intermodulationsprodukts beinhaltet.

$$\Delta t = \frac{\varphi_{IM3Mess} - \varphi_{IM3Mess}'}{(2 \cdot 2\pi f_1 - 2\pi f_2) - (2 \cdot 2\pi f_1' - 2\pi f_2')} \qquad (15)$$

Die in einer Vormessung ermittelten Phasenänderungen $\Delta\varphi_{IM3DUI\_Mess}$ bzw. $\Delta\varphi_{IM3DUT\_Mess}'$ des passiven Intermodulationsproduktes zwischen dem Eingangs- bzw. Ausgangsanschluss des verteilten Messobjekts und dem Messgerät bei den beiden Anregungen, die aufgrund der unterschiedlichen Frequenzen $2 \cdot f_1 - f_2$ bzw. $2 \cdot f_1' - f_2'$ der beiden Anregungen unterschiedlich sind, werden gemäß Gleichung (16) zur Berechnung der Laufzeit $\Delta t$ des passiven Intermodulationsprodukts zwischen dem Entstehungsort des passiven Intermodulationsprodukts und dem Eingangs- bzw. Ausgangsanschluss des verteilten Messobjekts berücksichtigt.

$$\Delta t = \frac{\varphi_{IM3Mess} - \Delta\varphi_{IM3DUT\_Mess} - (\varphi_{IM3Mess}' - \Delta\varphi_{IM3DUT\_Mess}')}{(2 \cdot 2\pi f_1 - 2\pi f_2) - (2 \cdot 2\pi f_1' - 2\pi f_2')} \qquad (16)$$

Bei Kenntnis der Topologie des verteilten Messobjekts kann aus der berechneten Laufzeit $\Delta t$ des passiven Intermodulationsproduktes zwischen dem Entstehungsort des passiven Intermodulationsprodukt und dem Eingangs- bzw. Ausgangsanschluss des verteilten Messobjekts auf den Entstehungsort des passiven Intermodulationsprodukts innerhalb des verteilten Messobjekts geschlossen werden.

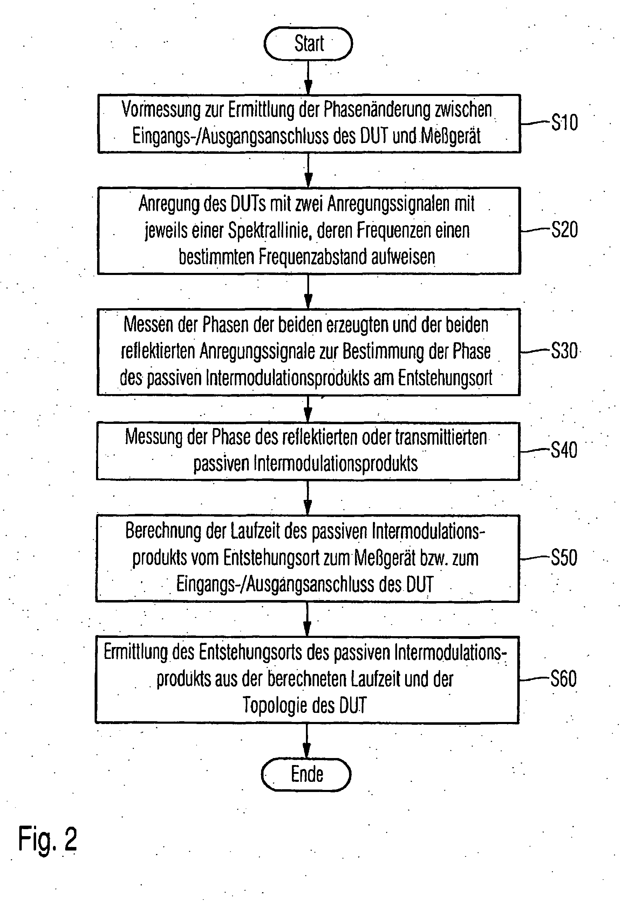

Im Folgenden wird das erste Beispiel des Verfahrens zur Ermittlung des Entstehungsortes von passiven Intermodulationsprodukten in Messobjekten anhand des Flussdiagramms in Fig. 2 und das System zur Ermittlung des Entstehungsortes von passiven Intermodulationsprodukten in Messobjekten anhand des Blockdiagramms in Fig. 1 erläutert.

In einem ersten Verfahrensschritt S10 wird in einer Vormessung die Phasenänderung $\Delta\varphi_{IM3DUT\_Mess}$ des an einem Entstehungsort innerhalb des verteilten Messobjekts (DUT: device under test) 1 erzeugten passiven Intermodulationsprodukts vom Eingangsanschluss 2 oder vom Ausgangsanschluss 3 des verteilten Meßobjekts 1 zum Mess-Eingang 4 eines Messgeräts 5, bevorzugt eines vektoriellen Netzwerkanalysators, bei der Frequenz $2 \cdot f_1 - f_2$ des passiven Intermodulationsprodukts ermittelt. Hierzu werden in einer im vektoriellen Netzwerkanalysator 5 integrierten Signalquelle 16 zwei rein sinusförmige Anregungssignale $x_1(t)$ und $x_2(t)$ mit einer Spektrallinie bei der Frequenz $f_1$ und $f_2$ erzeugt und an den beiden Ausgängen 6 und 7 des vektoriellen Netzwerkanalysators 5 ausgegeben.

Nach Verstärkung der beiden Anregungssignale $x_1(t)$ und $x_2(t)$ in jeweils einem externen Signalverstärker 8 und 9 werden die beiden Anregungssignale $x_1(t)$ und $x_2(t)$ in einem Signalkombinierer 10 zu einem einzigen Anregungssignal zusammengefügt. In einem nachfolgenden ersten Duplexfilter 11 wird das erzeugte Anregungssignal zum Eingangsanschluss 2 des verteilten Messobjekts 1 geleitet, während im Wechsel dazu das am Entstehungsort des passiven Intermodulationsprodukts innerhalb des verteilten Messobjekts 1 reflektierte passive Intermödulationsprodukt einem ersten Eingang 12 eines Schalters 12 zugeführt wird, dessen Ausgang mit dem Mess-Eingang 4 des vektoriellen Netzwerkanalysators 5 verbunden ist.

Leitet das erste Duplexfilter 11 das reflektierte passive Intermodulationsprodukt zu einem ersten Eingang 14 eines Schalters 12 und schaltet der Schalter 12 seinen mit dem ersten Duplexfilter 11 verbundenen ersten Eingang 14 an seinen Ausgang durch, so kann in der Vormessung die Phasenänderung $\Delta\varphi_{IM3DUT\_Mess}$ des reflektierten Intermodulationsprodukts jeweils bei der Frequenz $2 \cdot f_1 - f_2$ des passiven Intermodulationsprodukts vom Eingangsanschluss 2 des verteilten Messobjekts 1 zum Mess-Eingang 4 des Messgeräts 5 bestimmt werden, indem die Phase des reflektierten passiven Intermodulationsprodukts am Eingangsanschluss 2 des verteilten Messobjekts 1 und gleichzeitig am Mess-Eingang 4 des vektoriellen Netzwerkanalysator 5 ermittelt wird.

Die Messung der Phasenänderung $\Delta\varphi_{IM3DUT\_Mess}$ des transmittierten passiven Intermodulationsprodukts vom Ausgangs-Anschluss 3 des verteilten Messobjekts 1 zum Mess-Eingang 4 des vektoriellen Netzwerkanalysators 5 wird bestimmt, indem das mit dem Ausgangs-Anschluss 3 des verteilten Messobjekts 1 verbundene zweite Duplexfilter 13 den Ausgangs-Anschluss 3 des verteilten Messobjekts 1 mit einem zweiten Eingang 15 des Schalters 12 und der Schalter 12 seinen zweiten Eingang 15 mit dem Mess-Eingang 4 verbindet. Zur Messung der Phasenänderung $\Delta\varphi_{IM3DUT\_Mess}$ des transmittierten passiven Intermodulationsprodukts zwischen dem Ausgangsanschluss 3 des verteilten Messöbjekts 1 und dem Mess-Eingang 4 des vektoriellen Netzwerkanalysators 5 wird der Eingangsanschluss 2 des verteilten Messobjekts 1 mit zwei rein sinusförmigen Anregungssignalen $x_1(t)$ und $x_2(t)$ mit jeweils einer Spektrallinie bei der Frequenz $f_1$ und $f_2$ beaufschlagt. Im Fall der Messung des reflektierten passiven Intermodulationsprodukts ist der Ausgangsanschluss 3 des verteilten Messobjekts 1 über das zweite Duplexfilter 13 mit der Anpass-Impedanz 14 verbunden.

Im nächsten Verfahrensschritt S20 wird der Eingangsanschluss 2 des verteilten Messobjekts 1 mit zwei im vektoriellen Netzwerkanalysator 5 erzeugten Anregungssignalen $x_1(t)$ und $x_2(t)$ gemäß Gleichung (1A) und (1B) angeregt, die jeweils eine einzige Spektrallinie aufweisen, deren Frequenzen $f_1$ und $f_2$ gemäß Gleichung (1C) einen bestimmten Frequenzabstand $\Delta f$ besitzen.

Im darauffolgenden Verfahrensschritt S30 werden die Phasen $\varphi_{1Erzeug}$ bzw. $\varphi_{2Erzeug}$ der beiden Anregungssignale $x_1(t)$ und $x_2(t)$ bei der Erzeugung der beiden Anregungssignale $x_1(t)$ und $x_2(t)$ und die Phasen $\varphi_{1Mess}$ bzw. $\varphi_{2Mess}$ der beiden am Entstehungsort des passiven Intermodulationsprodukts reflektierten Anregungssignale $x_1(t)$ und $x_2(t)$ am identischen Messort, nämlich am Ort der Signalerzeugung, gemessen, um mit diesen gemessenen Phasen $\varphi_{1Erzeug}$ bzw. $\varphi_{2Erzeug}$ und $\varphi_{1Mess}$ bzw. $\varphi_{2Mess}$ gemäß Gleichung (8A) und (8B) die Phasen $\varphi_1$ und $\varphi_2$ der beiden Anregungssignale am Entstehungsort des passiven Intermodulationsprodukts zu berechnen. Mit den Phasen $\varphi_1$ und $\varphi_2$ der beiden Anregungssignale am Entstehungsort des passiven Intermodulationsprodukts wird die Phase $\varphi_{IM3Entst}$ des passiven Intermodulationsprodukts dritter Ordnung am Entstehungsort gemäß Gleichung (4) berechnet.

Im nächsten Verfahrensschritt S40 wird die Phase $\varphi_{IM3Mess}$ des passiven Intermodulationsprodukts dritter Ordnung im vektoriellen Netzwerkanalysator 5, das mit den Eingangs- oder Ausgangsanschluss des verteilten Messobjekts 1 verbunden ist, gemessen.

Im darauffolgenden Verfahrensschritt S50 wird die Laufzeit $\Delta t$, des passiven Intermodulationsproduktes zwischen dem Entstehungsort des passiven Intermodulationsprodukts und dem Eingangs- bzw. Ausgangsanschluss des verteilten Messobjekts gemäß Gleichung (7) berechnet. Hierzu wird die im vektoriellen Netzwerkanalysator 5 gemessene Phase $\varphi_{IM3Mess}$ des passiven Intermodulationsprodukts, die berechnete Phase $\varphi_{IM3Entst}$ des passiven Intermodulationsprodukts am Entstehungsort, die ermittelten Phasenänderung $\Delta\varphi_{IM3DUT\_Mess}$ des reflektierten passiven Intermodulationsprodukts vom Eingangsanschluss 2 des verteilten Messobjekts 1 zum Mess-Eingang 4 des vektoriellen Netzwerkanalysators 5 bzw. des transmittierten passiven Intermodulationsprodukts vom Ausgangs-Anschluss 3 des verteilten Messobjekts 1 zum Mess-Eingang 4 des vektoriellen Netzwerkanalysators 5 und die Frequenz $2 \cdot f_1 - f_2$ des passiven Intermodulationsprodukts verwendet.

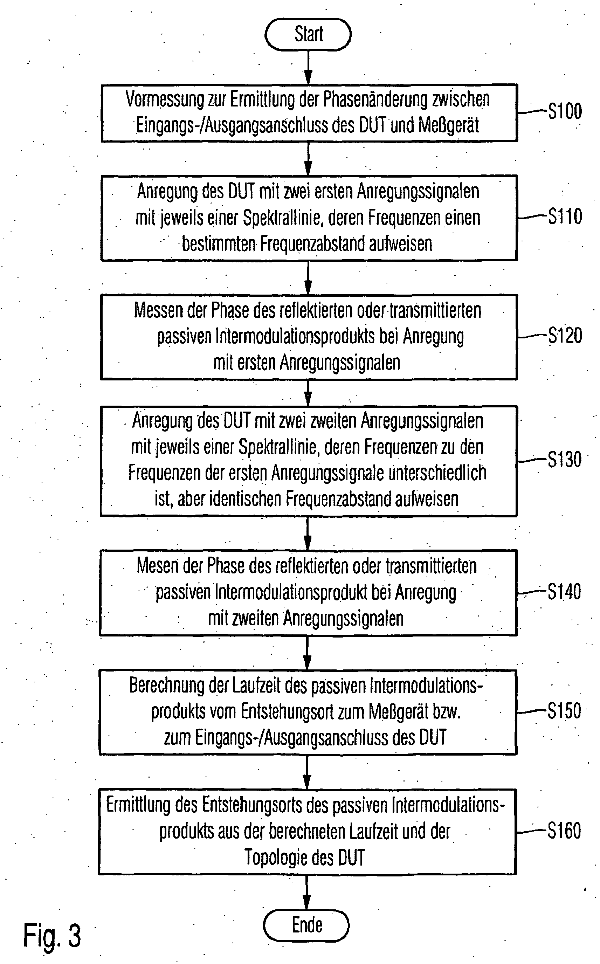

Schließlich wird im abschließenden Verfahrensschritt S60 in einer im vektoriellen Netzwerkanalysator 5 integrierten Berechnungseinheit 17 der Entstehungsort des passiven Intermodulationsprodukts innerhalb des verteilten Messobjekts 1 anhand der bekannten Topologie des verteilten Messobjekts 1 und der im vorherigen Verfahrensschritt S60 berechneten Laufzeit $\Delta t$ des passiven Intermodulationsproduktes zwischen dem Entstehungsort des passiven Intermodulationsprodukts und dem Eingangs- bzw. Ausgangsanschluss des verteilten Messobjekts ermittelt. Im Folgenden wird die Ausführungsform des erfindungsgemäßen Verfahrens zur Ermittlung des Entstehungsortes von passiven Intermodulationsprodukten in Messobjekten anhand des Flussdiagramms in Fig. 3 in Kombination mit dem System zur Ermittlung des Entstehungsortes von passiven Intermodulationsprodukten in Messobjekten anhand des Blockdiagramms in Fig. 1 erläutert.

Die Vormessung im ersten Verfahrensschritt S100 entspricht im Wesentlichen der Vormessung des Verfahrensschritts S10 des ersten Beispiels des Verfahrens. Da das verteilte Messobjekt 1 in zwei Messungen mit Anregungssignalen mit jeweils unterschiedlichen Frequenzen $f_1$ und $f_2$ bzw. $f_1'$ und $f_2'$ beaufschlagt wird, weisen die dabei erzeugten passiven Intermodulationsprodukte jeweils unterschiedliche Frequenzen $2 \cdot f_1 - f_2$ und $2 \cdot f_1' - f_2'$ auf, die zu jeweils unterschiedlichen Phasenänderungen $\Delta\varphi_{IM3DUT\_Mess}$ und $\Delta\varphi_{IM3DUT\_Mess}'$ des passiven Intermodulationsproduktes zwischen dem Eingangs- bzw. Ausgangsanschluss des verteilten Messobjekts und dem Messgerät führen. Insofern sind in der Ausführungsform des erfindungsgemäßen Verfahrens in zwei Messungen jeweils die. Phäsenänderungen $\Delta\varphi_{IM3DUT\_Mess}$ und $\Delta\varphi_{IM3DUT\_Mess}'$ des passiven Intermodulationsproduktes zwischen dem Eingangs- bzw. Ausgangsanschluss des verteilten Meßobjekts und dem Messgerät bei Anregung des verteilten Messobjekts 1 mit in einer Signalquelle 16 des vektoriellen Netzwerkanalysators 5 erzeugten Anregungssignalen bei den jeweiligen Frequenzen $f_1$ und $f_2$ bzw. $f_1'$ und $f_2'$ durchzuführen.

Der nächste Verfahrensschritt S110 des erfindungsgemäßen Verfahrens beinhaltet in Analogie zum Verfahrensschritt S20 des ersten Beispiels des Verfahrens eine erste Anregung des verteilten Meßobjekts 1 mit in der Signalquelle 16 des vektoriellen Netzwerkanalysators 5 erzeugten Anregungssignalen $x_1(t)$ und $x_2(t)$ bei den Frequenzen $f_1$ und $f_2$.

Der nächste Verfahrensschritt S120 des erfindungsgemäßen Verfahrens entspricht dem Verfahrensschritt S30 des ernsten Beispiels des Verfahrens und beinhaltet die Messung der Phase $\varphi_{IM3Mess}$ des reflektierten oder transmittierten passiven Intermodulationsprodukts dritter Ordnung im vektoriellen Netzwerkanalysator 5 bei der ersten Anregung des verteilten Meßobjekts 1.

Im nächsten Verfahrensschritt S130 des erfindungsgemäßen Verfahrens wird das verteilte Messobjekt 1 ein zweites Mal mit den in der Signalquelle 16 des vektoriellen Netzwerkanalysators 5 erzeugten Anregungssignalen $x_1'(t)$ und $x_2'(t)$ mit Spektrallinien bei den Frequenzen $f_1'$ und $f_2'$ gemäß Gleichung (9A) und (9B) beaufschlagt. Hierbei ist zu beachten, dass während des Frequenzumschaltens von der Frequenz $f_1$ zur Frequenz $f_1'$ und von der Frequenz $f_2$ zur Frequenz $f_2'$ die Phasenkohärenz aufrecht erhalten bleibt, es also zu keinen Phasensprüngen während des Frequenzumschaltens kommt. Dies lässt sich z.B. mithilfe des in der DE 10 2006 017 018 A1 beschriebehen Secum-Trahenz-Verfahrens realisieren. Jene Anmeldung wird hiermit durch Referenzierung in die vorliegende Anmeldung einbezogen.

Im darauffolgenden Verfahrensschritt S140 wird die Phase $\varphi_{IM3Mess}'$ des reflektierten oder transmittierten passiven Intermodulationsprodukts dritter Ordnung im vektoriellen Netzwerkanalysator 5 bei der zweiten Anregung des verteilten Messobjekts 1 gemessen.

Im darauffolgenden Verfahrensschritt S150 wird in einer im vektoriellen Netzwerkanalysator 5 integrierten Berechnungseinheit 17 die Laufzeit $\Delta t$ des passiven Intermodulationsproduktes zwischen dem Entstehungsort des passiven Intermodulationsprodukts und dem Eingangs- bzw. Ausgangsanschluss des verteilten Messobjekts gemäß Gleichung (16) berechnet. Hierzu werden die im vektoriellen Netzwerkanalysator 5 bei den beiden Anregungen des verteilten Meßobjekts 1 jeweils gemessenen Phasen $\varphi_{IM3Mess}$ und $\varphi_{IM3Mess}'$ des passiven Intermodulationsprodukts, die für die beiden Anregungen des verteilten Meßobjekts ermittelten Phasenänderung $\Delta\varphi_{IM3DUT-Mess}$ und $\Delta\varphi_{IM3DUT\_Mess}'$ des reflektierten passiven Intermodulationsprodukts vom Eingangsanschluss 2 des verteilten Messobjekts 1 zum Mess-Eingang 4 des vektoriellen Netzwerkanalysators 5 bzw. des transmittierten passiven Intermodulationsprodukts vom Ausgangs-Anschluss 3 des verteilten Messobjekts 1 zum Mess-Eingang 4 des vektoriellen Netzwerkanalysators 5 und die Frequenzen $2 \cdot f_1 - f_2$ und $2 \cdot f_1' - f_2'$ des passiven Intermodulationsprodukts bei den beiden Anregungen des verteilten Meßobjekts 1 verwendet.

Schließlich wird im abschließenden Verfahrensschritt S160 der Entstehungsort des passiven Intermodulationsprodukts innerhalb des verteilten Messobjekts 1 anhand der bekannten Topologie des verteilten Messobjekts 1 und der im vorherigen Verfahrensschritt S150 berechneten Laufzeit $\Delta t$ des passiven Intermodulationsproduktes zwischen dem Entstehungsort des passiven Intermodulationsprodukts und dem Eingangs- bzw. Ausgangsanschluss des verteilten Messobjekts ermittelt.

Die Erfindung ist nicht auf die dargestellten Ausführungsformen beschränkt. Von der Erfindung sind anstelle von vektoriellen Netzwerkanalysatoren auch andere phasenmesssende Messgeräte mit abgedeckt.

**Patentansprüche**

1. Verfahren zur Ermittlung des Entstehungsortes eines passiven Intermodulationsproduktes umfassend folgende Verfahrensschritte:

• Anregen eines verteilten Messobjekts (1) mit zwei ersten Anregungssignalen mit jeweils einer einzigen Spektrallinie, deren Frequenzen zueinander einen Frequenzabstand aufweisen,
• Messen einer Phase eines am Entstehungsort im verteilten Messobjekt (1) durch nichtlineare Verzerrung aus den ersten Anregungssignalen erzeugten ersten passiven Intermodulationsproduktes,
• Anregen des verteilten Messobjekts (1) mit zwei zweiten Anregungssignalen mit jeweils einer einzigen Spektrallinie, deren Frequenzen jeweils unterschiedlich zu den Frequenzen der ersten Anregungssignale sind und einen zum Frequenzabstand der ersten Anregungssignale identischen Frequenzabstand aufweisen,
• Messen der Phase eines am Entstehungsort im verteilten Messobjekt (1) durch nichtlineare Verzerrung aus den zweiten Anregungssignalen erzeugten zweiten passiven Intermodulationsproduktes,
• Berechnen der Laufzeit des ersten passiven Intermodulationsproduktes vom Entstehungsort zum Messgerät (5) aus der gemessenen Phase und den Frequenzen des ersten passiven Intermodulationsproduktes und aus der Phase und den Frequenzen des zweiten passiven Intermodulationsproduktes, und
• Ermitteln des Entstehungsortes des passiven Intermodulationsproduktes aus der Laufzeit und der Topologie des verteilten Messobjekts (1).

2. Verfahren nach Anspruch 1,
**dadurch gekennzeichnet,**
dass die Phase des ersten passiven Intermodulationsprodukts am Entstehungsort des passiven Intermodulationsprodukt zur Phase des zweiten passiven Intermodulationsprodukts am Entstehungsort des passiven Intermodulationsprodukt phasenkohärent ist.

3. Verfahren nach einem der Ansprüche 1 bis 2,
**dadurch gekennzeichnet,**
dass die Phase des am Entstehungsort im Messobjekt (1) erzeugten und reflektierten ersten und zweiten passiven Intermodulationsproduktes gemessen wird.

4. Verfahren nach Anspruch 3,
**dadurch gekennzeichnet,**
dass eine Phasenänderung des ersten passiven Intermodulationsproduktes bzw. des ersten und zweiten passiven Intermodulationsproduktes aufgrund der Reflexion für alle verwendeten Frequenzen des ersten und zweiten Anregungssignals konstant ist.

5. Verfahren nach einem der Ansprüche 1 bis 2,
**dadurch gekennzeichnet,**
dass die Phase des am Entstehungsort im Messobjekt (1) erzeugten und transmittierten ersten und zweiten passiven Intermodulationsproduktes gemessen wird.

6. Verfahren nach einem der Ansprüche 1 bis 5,
**dadurch gekennzeichnet,**
dass bevorzugt das passive Intermodulationsprodukt dritter Ordnung gemessen wird.

7. Verfahren nach einem der Ansprüche 1 bis 6,
**dadurch gekennzeichnet,**
dass in einer Vormessung die Phasenänderung der ersten und zweiten Anregungssignale vom Eingangs- bzw. Ausgangsanschluss (2,3) des Meßobjekts (1) bis zum Messgerät (5) gemessen wird und in der gemessenen Phase des ersten und zweiten passiven Intermodulationsproduktes kompensiert wird.

8. System zur Ermittlung des Entstehungsortes eines passiven Intermodulationsproduktes innerhalb eines verteilten Messobjekts (1) unter Verwendung des Verfahrens nach einem der Ansprüche 1 bis 7 mit

einer Signalquelle (16) zur Erzeugung von zwei Anregungssignalen mit jeweils einer einzigen Spektrallinie, deren Frequenzen zueinander einen Frequenzabstand aufweisen,

dem verteilten Messobjekt (1), dessen Eingangsanschluss (2) mit der Signalquelle (16) verbunden ist,

einem Messgerät (5), das mit dem Eingangs- oder dem Ausgangsanschluss (2,3) des verteilten Messobjekts (1) verbunden ist, zur Messung der Phase von am Entstehungsort durch nichtlineare Verzerrung der beiden Anregungssignale erzeugten passiven Intermodulationsprodukten und

einer Berechnungseinheit (17) zur Ermittlung der Laufzeit von passiven Intermodulationsprodukten zwischen dem Entstehungsort von passiven Intermodulationsprodukten und dem Messgerät (5) und damit des Entstehungsortes von passiven Intermodulationsprodukten.

**Claims**

1. Method for determining the location of origin of a passive intermodulation product comprising the following steps:

    • excitation of a distributed device under test (1) with two first excitation signals each with a single spectral line, the frequencies of which exhibit a frequency separation relative to one another,
    • measurement of a phase of a first passive intermodulation product produced from the first excitation signals at the location of origin in the distributed device under test (1) by non-linear distortion,
    • excitation of the distributed device under test (1) with two second excitation signals each with a single spectral line, the frequencies of which are each different to the frequencies of the first excitation signals and exhibit a frequency separation relative to one another identical to the frequency separation of the first excitation signals,
    • measurement of the phase of a second passive intermodulation product produced from the second excitation signals at the location of origin in the distributed device under test (1) by non-linear distortion,
    • calculation of the travel time of the first passive intermodulation product from the location of origin to the measuring device (5) from the measured phase and the frequencies of the first passive intermodulation product and from the phase and the frequencies of the second passive intermodulation product, and
    • determination of the location of origin of the passive intermodulation product from the travel time and the topology of the distributed device under test (1).

2. Method according to claim 1, **characterised in that** the phase of the first passive intermodulation product at the location of origin of the passive intermodulation product is phase-coherent with the phase of the second passive intermodulation product at the location of origin of the passive intermodulation product.

3. Method according to one of claims 1 to 2, **characterised in that** the phase of the first and second passive intermodulation product produced and reflected at the location of origin in the device under test (1) is measured.

4. Method according to claim 3, **characterised in that** a phase change of the first passive intermodulation product or of the first and second passive intermodulation product is constant due to the reflection for all the frequencies used of the first and second excitation signal.

5. Method according to one of claims 1 to 2, **characterised in that** the phase of the first and second passive intermodulation product produced and transmitted at the location of origin in the device under test (1) is measured.

6. Method according to one of claims 1 to 5, **characterised in that** preferably the passive intermodulation product of the third order is measured.

7. Method according to one of claims 1 to 6, **characterised in that** in a preliminary measurement the phase change of the first and second excitation signals is measured from the input or output connection (2, 3) of the device under test (1) to the measuring device (5) and compensated in the measured phase of the first and second passive intermodulation product.

8. System for determining the location of origin of a passive intermodulation product inside a distributed device under test (1) using the method according to one of claims 1 to 7 with

a signal source (16) for production of two excitation signals each with a single spectral line, the frequencies of which exhibit a frequency separation relative to one another,

the distributed device under test (1) the input connection (2) of which is connected with the signal source (16), a measuring device (5) which is connected with the input or the output connection (2, 3) of the distributed device under test (1), for measuring the phase of the passive intermodulation products produced at the location of origin by non-linear distortion of the two excitation signals, and

a calculation unit (17) for determining the travel time of passive intermodulation products between the location of origin of passive intermodulation products and the measuring device (5) and hence the location of origin of passive intermodulation products.

**Revendications**

1. Procédé de détermination du lieu d'apparition d'un produit d'intermodulation passif comportant les étapes de procédé suivantes :

   • exciter un objet à mesurer réparti (1) avec deux signaux d'excitation comportant respectivement une ligne spectrale unique, dont les fréquences présentent un écart de fréquence entre elles,
   • mesurer une phase d'un premier produit d'intermodulation passif généré sur le lieu d'apparition dans l'objet à mesurer réparti (1) par distorsion non linéaire à partir des premiers signaux d'excitation,
   • exciter l'objet à mesurer réparti (1) avec deux seconds signaux d'excitation comportant respectivement une ligne spectrale unique, dont les fréquences sont respectivement différentes par rapport aux fréquences des premiers signaux d'excitation et présentent un écart de fréquence identique à l'écart de fréquence des premiers signaux d'excitation,
   • mesurer la phase d'un second produit d'intermodulation passif généré sur le lieu d'apparition dans l'objet à mesurer réparti (1) par distorsion non linéaire à partir des seconds signaux d'excitation,
   • calculer le temps de propagation du premier produit d'intermodulation passif du lieu d'apparition à l'appareil de mesure (5) à partir de la phase mesurée et des fréquences du premier produit d'intermodulation passif et à partir de la phase et des fréquences du second produit d'intermodulation passif,
   et
   • déterminer le lieu d'apparition du produit d'intermodulation passif à partir du temps de propagation et de la topologie de l'objet à mesurer réparti (1).

2. Procédé selon la revendication 1, **caractérisé en ce que**
   la phase du premier produit d'intermodulation passif au lieu d'apparition du produit d'intermodulation passif est cohérente en phase par rapport à la phase du second produit d'intermodulation passif sur le lieu d'apparition du produit d'intermodulation passif.

3. Procédé selon l'une des revendications 1 à 2, **caractérisé en ce que**
   la phase du premier et du second produit d'intermodulation passif généré et réfléchi sur le lieu d'apparition dans l'objet à mesurer (1) est mesurée.

4. Procédé selon la revendication 3, **caractérisé en ce que**
   un changement de phase du premier produit d'intermodulation passif ou du premier et du second produit d'intermodulation passif est constant en raison de la réflexion pour toutes les fréquences utilisées du premier et du second signal d'excitation.

5. Procédé selon l'une des revendications 1 à 2, **caractérisé en ce que**
   la phase du premier et second produit d'intermodulation passif généré et transmis au lieu d'apparition dans l'objet à mesurer (1) est mesurée.

6. Procédé selon l'une des revendications 1 à 5, **caractérisé en ce que**
   le produit d'intermodulation passif de troisième ordre est de préférence mesuré.

7. Procédé selon l'une des revendications 1 à 6, **caractérisé en ce que**
   lors d'une prémesure, le changement de phase du premier et du second signal d'excitation est mesuré de la borne d'entrée ou de sortie (2, 3) de l'objet à mesurer (1) à l'appareil de mesure (5) et est compensé dans la phase mesurée du premier et du second produit d'intermodulation passif.

8. Système de détermination du lieu d'apparition d'un objet d'intermodulation passif à l'intérieur d'un objet à mesurer réparti (1) en utilisant le procédé selon l'une des revendications 1 à 7 comportant

une source de signal (16) pour générer deux signaux d'excitation avec respectivement une ligne spectrale unique, dont les fréquences présentent un écart de fréquence entre elles,

l'objet à mesurer réparti (1), dont la borne d'entrée (2) est reliée à la source de signal (16),

un appareil de mesure (5), qui est relié à la borne d'entrée ou de sortie (2, 3) de l'objet à mesurer réparti (1), en vue de la mesure de la phase des produits d'intermodulation passifs générés sur le lieu d'apparition par distorsion non linéaire des deux signaux d'excitation et

une unité de calcul (17) pour déterminer le temps de propagation des produits d'intermodulation passifs entre le lieu d'apparition des produits d'intermodulation passifs et l'appareil de mesure (5) et ainsi du lieu d'apparition des produits d'intermodulation passifs.

Fig. 1

Start

Vormessung zur Ermittlung der Phasenänderung zwischen Eingangs-/Ausgangsanschluss des DUT und Meßgerät — S10

Anregung des DUTs mit zwei Anregungssignalen mit jeweils einer Spektrallinie, deren Frequenzen einen bestimmten Frequenzabstand aufweisen — S20

Messen der Phasen der beiden erzeugten und der beiden reflektierten Anregungssignale zur Bestimmung der Phase des passiven Intermodulationsprodukts am Entstehungsort — S30

Messung der Phase des reflektierten oder transmittierten passiven Intermodulationsprodukts — S40

Berechnung der Laufzeit des passiven Intermodulations-produkts vom Entstehungsort zum Meßgerät bzw. zum Eingangs-/Ausgangsanschluss des DUT — S50

Ermittlung des Entstehungsorts des passiven Intermodulations-produkts aus der berechneten Laufzeit und der Topologie des DUT — S60

Ende

Fig. 2

Fig. 3

**Start**

Vormessung zur Ermittlung der Phasenänderung zwischen Eingangs-/Ausgangsanschluss des DUT und Meßgerät — S100

Anregung des DUT mit zwei ersten Anregungssignalen mit jeweils einer Spektrallinie, deren Frequenzen einen bestimmten Frequenzabstand aufweisen — S110

Messen der Phase des reflektierten oder transmittierten passiven Intermodulationsprodukts bei Anregung mit ersten Anregungssignalen — S120

Anregung des DUT mit zwei zweiten Anregungssignalen mit jeweils einer Spektrallinie, deren Frequenzen zu den Frequenzen der ersten Anregungssignale unterschiedlich ist, aber identischen Frequenzabstand aufweisen — S130

Mesen der Phase des reflektierten oder transmittierten passiven Intermodulationsprodukt bei Anregung mit zweiten Anregungssignalen — S140

Berechnung der Laufzeit des passiven Intermodulations-produkts vom Entstehungsort zum Meßgerät bzw. zum Eingangs-/Ausgangsanschluss des DUT — S150

Ermittlung des Entstehungsorts des passiven Intermodulations-produkts aus der berechneten Laufzeit und der Topologie des DUT — S160

**Ende**

**IN DER BESCHREIBUNG AUFGEFÜHRTE DOKUMENTE**

**In der Beschreibung aufgeführte Patentdokumente**

- US 20100164504 A1
- DE 102006017018 A1